# EUROPÄISCHE PATENTSCHRIFT

(11) **EP 2 052 132 B1**
(45) Veröffentlichungstag und Bekanntmachung des Hinweises auf die Patenterteilung: **16.02.2011**
(21) Anmeldenummer: 07787117.6
(22) Anmeldetag: 05.07.2007
(51) Int. Cl.: F01C 17/06, F02M 39/02, F02M 59/44

(54) **KRAFTSTOFFEINSPRITZPUMPE MIT EINER VERBESSERTEN ANTRIEBSKUPPLUNG**
FUEL INJECTION PUMP WITH AN IMPROVED DRIVE CLUTCH
POMPE D'INJECTION DE CARBURANT AVEC ACCOUPLEMENT D'ENTRAÎNEMENT AMÉLIORÉ

(30) Priorität: 09.08.2006 DE 102006037176
(43) Veröffentlichungstag der Anmeldung: 29.04.2009
(73) Patentinhaber: Robert Bosch GmbH, 70442 Stuttgart (DE)
(72) Erfinder: SCHOETZ, Alfons, 71254 Ditzingen (DE); KARAOSMANOGLU, Namik, 70439 Stuttgart (DE)
(86) Internationale Anmeldenummer: PCT/EP2007/056827
(87) Internationale Veröffentlichungsnummer: WO 2008/017546

(56) Entgegenhaltungen:
- EP-A- 0 499 787
- WO-A-92/04539
- DE-A1- 4 341 424
- DE-A1- 19 541 606
- US-A- 1 865 950

## Beschreibung

### Stand der Technik

Die vorliegende Erfindung betrifft eine Kraftstoffeinspritzpumpe für eine Verbrennungskraftmaschine nach dem Oberbegriff des Anspruchs 1.

Kraftstoffeinspritzpumpen der hier interessierenden Art finden insbesondere Anwendung bei Verbrennungskraftmaschinen, welcher derartige Kraftstoffeinspritzpumpen dafür nutzen, den zu verbrennenden Kraftstoff mit einem Hochdruck bereitzustellen, welcher mittels Kraftstoffinjektoren der Verbrennungskraftmaschine zugeführt wird.

Aus der gattungsbildenden Offenlegungsschrift DE 195 41606 A1 ist eine Kraftstoffeinspritzpumpe mit einer Kupplungseinheit für eine Verbrennungskraftmaschine bekannt, bei der der Übertragungskörper als Kreuzscheibe ausgebildet ist und Wälzkörper umfasst, welche eine Wälzlagerung zwischen den Klauenflächen der Klauennabe und des Pumpengliedes bezwecken. Mit dieser Anordnung wird zwar die Verschleißfestigkeit der Anlagenflächen zwischen der Klauennabe und dem Pumpenglied erhöht, jedoch erweist sich diese Konstruktion als sehr aufwendig, da die Wälzkörper in jeweiligen Stegen der Kreuzscheibe gelagert werden müssen.

In der DE 43 41 424 A1 ist eine Kraftstoffeinspritzpumpe der sogenannten Verteilerbauart beschrieben, bei der zur Kupplung von einer Antriebswelle und einer Verteilerwelle an dem der Verteilerwelle zugekehrten Ende der Antriebswelle ein die Verteilerwelle fächerartig übergreifender, stutzenförmiger Kupplungskopf ausgebildet ist. In diesen Kupplungskopf ragt in einer Ausführungsform eine Kupplungsscheibe hinein, die Kupplungsstege mit einer balligen Verbreiterung aufweist. Dadurch soll eine spiellose Führung in den zugeordneten Axialschlitzen des Kupplungskopfes erreicht werden.

In der Offenlegungsschrift DE 41 05 353 A1 ist eine Kraftstoffeinspritzpumpe mit einer Kupplungseinheit für eine Verbrennungskraftmaschine offenbart, bei der die Ausnehmungen des Übertragungskörpers so gestaltet sind, dass je eine der Ausnehmungen zugleich je eine Klaue sowohl des Pumpengliedes als auch der Klauennabe nebeneinander liegend aufnimmt und diese die Ausnehmungen des Übertragungskörpers eingreifen. Damit ist zwar der Vorteil geschaffen, dass bei gleichem Platzbedarf für die Klauen und für den Übertragungskörper wesentlich höhere Antriebsmomente von der Klauennabe an das Pumpenglied übertragen werden kann, jedoch können sogenannte Kantenträger auftreten, welche sich durch Spannungsspitzen an den Seitenkanten der Klauenflächen bilden, was zu einer vorzeitigen Materialermüdung und zu einem Ausfall der Kupplungseinheit führen kann.

In der Offenlegungsschrift DE 39 43 299 A1 ist eine weitere gattungsgemäße Kraftstoffeinspritzpumpe mit einer Kupplungseinheit für eine Verbrennungskraftmaschine offenbart, bei der Schmieröffnungen zum Austritt von Schmieröl innerhalb der Klauenflächen vorgesehen sind, und während des Betriebes das Schmieröl die Klauenflächen schmiert. Damit kann zwar eine Verlängerung der Lebensdauer erzielt werden, jedoch betrifft die Verlängerung der Lebensdauer lediglich einen verringerten abrasiven Verschleiß. Ein Ermüdungsverschleiß im Material der Klauennabe bzw. des Pumpengliedes oder sogar im Übertragungskörper aufgrund hoher Pressungen, die durch Kantenträger entstehen können, kann auch mit einer optimierten Schmierung nicht wesentlich verringert werden.

Es ist daher die Aufgabe der vorliegenden Erfindung, eine Kraftstoffeinspritzpumpe für eine Verbrennungskraftmaschine mit einer Kupplungseinheit zu schaffen, welche eine große Lebensdauer bei gleichzeitig großen übertragbaren Drehmomenten ermöglicht und zugleich eine einfache konstruktive Ausgestaltung aufweist.

### Offenbarung der Erfindung

Diese Aufgabe wird ausgehend von einer Kraftstoffeinspritzpumpe für eine Verbrennungskraftmaschine gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Klauenflächen mit einer nach außen gewölbten, balligen Oberfläche, die sich beginnend von einer Kehle im Übergang von dem Grundkörper der Klauennarbe und des Pumpengliedes zu den Klauen über die Höhe der Klauen erstreckt, ausgebildet sind, um wenigstens eine definierte Zone der Krafteinleitung vom Übertragungskörper in die Klauenfläche zu schaffen, sodass die in der Klaue durch die Kraftübertragung auftretenden Spannungen reduzierbar sind. Daraus ergibt sich der erfindungswesentliche Vorteil, dass durch die Einführung von balligen Klauenflächen die Klauen selber sowie die Kreuzscheibe hauptsächlich auf Biegung beansprucht werden und die Torsionsbeanspruchung minimiert ist. Durch die Geometrie der Klauen mit entsprechenden balligen Klauenflächen wird eine Spannungsreduktion von bis zu 30% erzielt. Zusätzlich wird die Pressung und damit auch der Verschleiß zwischen den Klauen und dem Übertragungskörper entsprechend reduziert sowie verbessert, da keine Kantenträger auftreten. Kantenträger sind Spannungsspitzen an Grenzflächen, welche durch Form- und Lagetoleranzen entstehen können. Diese Spannungsspitzen äußeren sich insbesondere in der Kehle zwischen der Klaue und dem Körper der Klauennabe bzw. des Pumpengliedes selber, und können sogar zum Bruch der Klauen führten. Durch eine ballige Oberfläche innerhalb der Klauenfläche wird eine definierte Krafteinleitung geschaffen, so dass auftretende Spannung optimal in den Körper der Klaue eingeleitet werden, ohne dass Spannungsspitzen auftreten, welche sogar die Fließgrenze des Materials erreichen können.

In Abhängigkeit von der Ausführungsform der Kupplungseinheit kann der Übertragungskörper als Kreuzscheibe ausgebildet sein, so dass die Kupplungseinheit eine Kreuzscheibeuhupplung darstellt. Alternativ besteht die Möglichkeit, die Übertragungskörper als Federscheibe auszubilden, so dass die Kupplungseinheit eine Oldham-Kupplung ist. Bei beiden Kupplungstypen ist ein Übertragungskörper vorgesehen, welcher entweder Klauen aufweist oder Federelemente, die in Nuten eingreifen, welcher wiederum in der Klauennabe bzw. im Pumpenglied eingebracht sind. Auch bei einer Feder-Nut-Verbindung können ballige Bereiche eine Spannungseinleitung in die jeweiligen Körperoberflächen ermöglichen, so dass das Wirkprinzip zur Vermeidung von Kantenträger auch bei einem Feder-Nut-Prinzip nutzbar gemacht werden kann.

Gemäß einer weiteren vorteilhaften Ausführungsform der vorliegenden Erfindung ist vorgesehen, dass die nach außen gewölbte ballige Oberfläche der Klauenflächen einem Abschnitt einer Zylindermantelfläche entspricht, sodass zwischen den Klauenflächen und dem Übertragungskörper eine Linienberührung entsteht. Alternativ kann vorgesehen sein, dass die nach außen gewölbte ballige Oberfläche der Klauenflächen einem Kugelabschnitt entspricht, so dass zwischen den Klauenflächen und dem Übertragungskörper eine Punktberührung entsteht. Bei einer Linienberührung zwischen den Klauenflächen und dem Übertragungskörper ist eine größere Tragfähigkeit gegeben, als bei einer Punktberühnung, jedoch bietet eine Punktberührung gegenüber einer Linienberührung den Vorteil, dass Form- und Lagetoleranzen sowohl in radialer Richtung als auch in tagenzialer Richtung ausgeglichen werden können. Die Herstellung der gewölbten balligen Oberfläche erfolgt mittels eines Schleifverfahrens, wobei zusätzlich vorgesehen sein kann, die Flächen der Krafteinleitung im Übertragungskörper ebenfalls ballig zu schleifen, solange dies fertigungstechnisch möglich ist. Der imaginäre Zylinder, dessen Mantelfläche die nach außen gewölbte ballige Oberfläche der Klauenflächen bildet, steht mit seiner Mittelachse orthogonal auf der Rotationsachse der Klauennabe bzw. des Pumpengliedes. Damit ist die Richtung festgelegt, in welcher sich die Erstreckung der Linienberührung zwischen dem Übertragungskörper und den Klauenflächen ergibt.

Vorteilhafterweise weist die ballige Oberfläche in den Klauenflächen einen Krümmungsradius R von 50mm bis 150mm, vorzugsweise von 75mm bis 125mm und besonders bevorzugt von 100mm auf. Die Klauennabe sowie das Pumpenglied der Pumpeneinheit umfassen jeweils zwei Klauen, welche sich 180° gegenüberstehen und jeweils ein Klauenpaar bilden. Das Klauenpaar der Klauennabe sowie das Klauenpaar des Pumpengliedes sind um 90° zueinander versetzt angeordnet, so dass die sich in tagenzialer Richtung erstreckenden Zwischenräume zwischen den Klauenpaaren durch den Übertragungskörper ausgefüllt werden. Der Übertragungskörper kann dabei symmetrisch sein, so dass die Zwischenräume zwischen den jeweiligen Klauenpaaren ebenfalls gleich bemaßt sind.

Gemäß einer weiteren vorteilhaften Ausführung der vorliegenden Erfindung ist vorgesehen, dass die Klauennabe sowie das Pumpenglied der Pumpeneinheit einen Stahlwerkstoff, umfassend den Werkstoff 16 MnCr5 aufweisen. Ferner besteht Vorteilhafterweise der Übertragungskörper der Kupplungseinheit aus einem Stahlwerkstoff, umfassend den Werkstoff 100 Cr6. Dieser im Allgemeinen als Wälzlagerwerkstoff bekannte Stahlwerkstoff weist eine hohe Reinheit auf und bietet bei einer spanenden Bearbeitung erhebliche Vorteile.

Vorteilhafterweise umfasst der Übertragungskörper sternförmige Stege, welche mit einer Maßtoleranz an die Klauenfläche angrenzen und die Maßtoleranz eine Luft von 5 Mikrometer bis 100 Mikrometer, vorzugsweise von 25 Mikrometer bis 75 Mikrometer und besonders bevorzugt von 50 Mikrometern aufweist. Damit ergibt sich eine geringe Luft zwischen den sternförmigen Auskragungen des Übertragungskörpers und den jeweiligen Klauen, so dass bei einem Versatz der Mittelachsen zwischen der Klauennabe und dem Pumpenglied sowie einem Winkelversatz keine Klemmungen bzw. überhöhte Pressungen auftreten.

Gemäß eines weiteren Ausführungsbeispiels der vorliegenden Erfindung ist vorgesehen, dass die Klauen im Übergang in den Grundkörper der Klauennabe und des Pumpengliedes eine Kehle aufweisen, wobei sich die nach außen gewölbte, ballige Oberfläche der Klauenfläche von der Kehle beginnend über die Höhe der Klaue erstreckt. Die Krümmung der Klauenfläche mit dem Krümmungsradius R verläuft von der Kehle beginnend bis zur Außenseite der Klaue, sodass die Linienberührung auch bei einem Winkelversatz des Pumpengliedes relativ zur Klauennabe erhalten beliebt, wobei lediglich die Berührungslinie zwischen der Klaue und dem Tragbereich des Übertragungskörpers verlagert wird.

Weitere, die Erfindung verbessernde Maßnahmen werden nachstehend gemeinsam mit der Beschreibung eines bevorzugten Ausführungsbeispiels der Erfindung anhand von Figuren näher dargestellt.

### Austührungsbeispiel

Es zeigt:
- Figur 1: eine Ansicht einer Kupplungseinheit einer Kraftstoffeinspritzpumpe in einer perspektivischen Darstellung;
- Figur 2a: eine perspektivische Ansicht eines Pumpengliedes mit einem Klauenpaar;
- Figur 2b: eine perspektivische Ansicht einer Klauennabe mit einem zugeordneten Klauenpaar;
- Figur 3a: eine isometrische Ansicht einer Klauennabe mit einem angeformten Klauenpaar, an welchem die nach außen gewölbten balligen Klauenflächen erkennbar sind;
- Figur 3b: eine weitere Ansicht der Klauennabe aus Figur 3a;
- Figur 3c: eine weitere Ansicht der Klauennabe aus Figur 3a und Figur 3b; und
- Figur 4: ein Ausschnitt einer Klaue in einer vergrößerten Darstellung der Klauennabe gemäß Ausschnitt in Figur 3b.

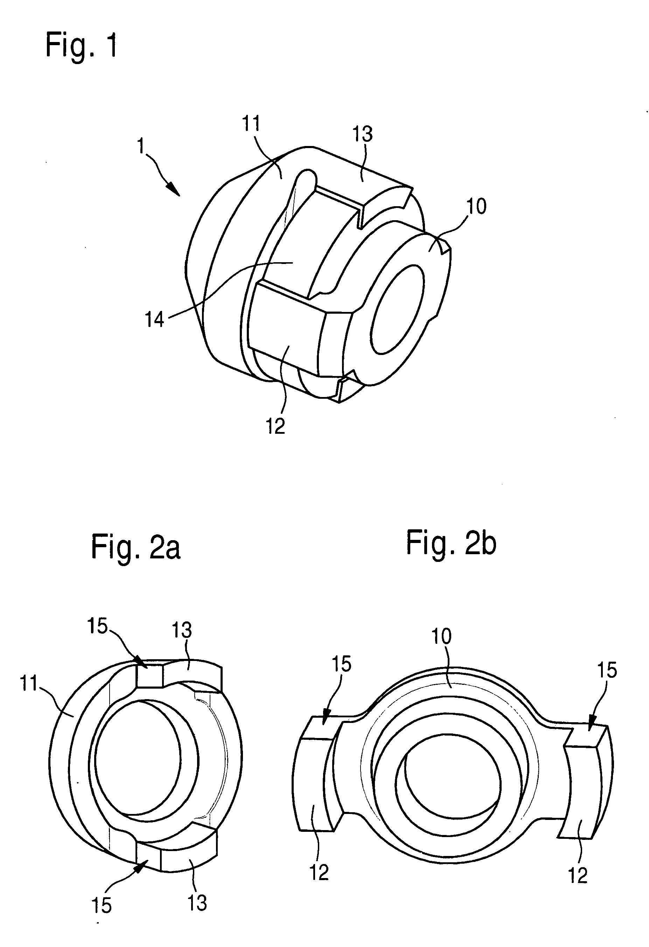

Die in Figur 1 gezeigte Kupplungseinheit 1 ist als Übertragungsglied des Antriebs eines Kraftstoffeinspritzpumpe für eine Verbrennungskraftmaschine ausgebildet. Die Kupplungseinheit 1 umfasst eine Klauennabe 10, in welche motorseitig ein Antriebsdrehmoment eingeleitet wird. Die Drehbewegung kann beispielsweise vom Abtrieb der Verbrennungskraftmaschine bereitgestellt werden. Die Klauennabe 10 weist ein Klauenpaar auf, welches aus zwei sich gegenüberstehenden Klauen 12 ausgebildet ist.

Die Klauen 12 sind dabei außenseitig an der Klauennabe 10 angeformt. Um eine sich drehende Welle des Antriebs mit der Klauennabe 10 zu verbinden, weist der Grundkörper der Klauennabe 10 ein mittig ausgebildetes Loch auf, in welches die Welle des Antriebs eingefügt sein kann, die somit mit der Klauennabe 10 axial- und verdrehfest verbunden ist. Der Klauennabe 10 gegenüberliegend ist ein Pumpenglied 11 angeordnet, welches mit den bewegten Komponenten der Kraftstoffeinspritzpumpe in Wirkverbindung steht. Auch das Pumpenglied 11 weist ein aus zwei Klauen 13 gebildetes Klauenpaar auf, welches sich in Richtung der Klauennabe 10 erstreckt. Die das jeweilige Klauenpaar bildenden Klauen 12 und 13 sind jeweils 180° gegenüberliegend angeordnet. Die beiden Klauenpaare sind wiederum um 90° zueinander versetzt angeordnet, so dass in Winkelabschnitten von je 90° abwechselnd eine Klaue 12 und eine Klaue 13 aufeinander folgt. Zwischen den Klauen ist ein Übertragungskörper 14 angeordnet, welcher gemäß des vorliegenden Ausführungsbeispiels als Kreuzscheibe ausgebildet ist. Die Kreuzscheibe umfasst vier dreiecksförmige Segmente, welche passgenau zwischen den Klauen 12 und 13 eingebracht werden können. Eine in die Klauennabe 10 eingeleitete Drehbewegung kann somit über die dreiecksförmigen Segmente des Übertragungskörpers 14 an das Pumpenglied 11 übertragen werden. Dabei kann die Rotationsachse der Klauennabe 10 und des Pumpengliedes 11 räumlich zueinander versetzt angeordnet sein, und sogar einen Winkelversatz zueinander aufweisen, welcher von der Anordnung der Klauennabe 10, des Pumpengliedes 11 sowie des Übertragungskörpers 14 ausgeglichen werden können.

Die Figuren 2a und 2b zeigen jeweils eine perspektivische Einzelansicht des Pumpengliedes 11 sowie der Klauennabe 10. Am Pumpenglied 11 sind die beiden Klauen 13 dargestellt, welche um 180° versetzt zueinander angeordnet sind. Jede Klaue 13 weist eine erste und eine zweite Klauenfläche 15 auf, welche durch die Körperoberfläche gebildet ist, die an den Übertragungskörper - siehe Figur 1 - angrenzen. Diese Klauenflächen 15 liegen sich gegenüber und begrenzen seitlich die jeweilige Klaue 12 und 13. Somit umfasst die Kupplungseinheit insgesamt acht Klauenflächen 15.

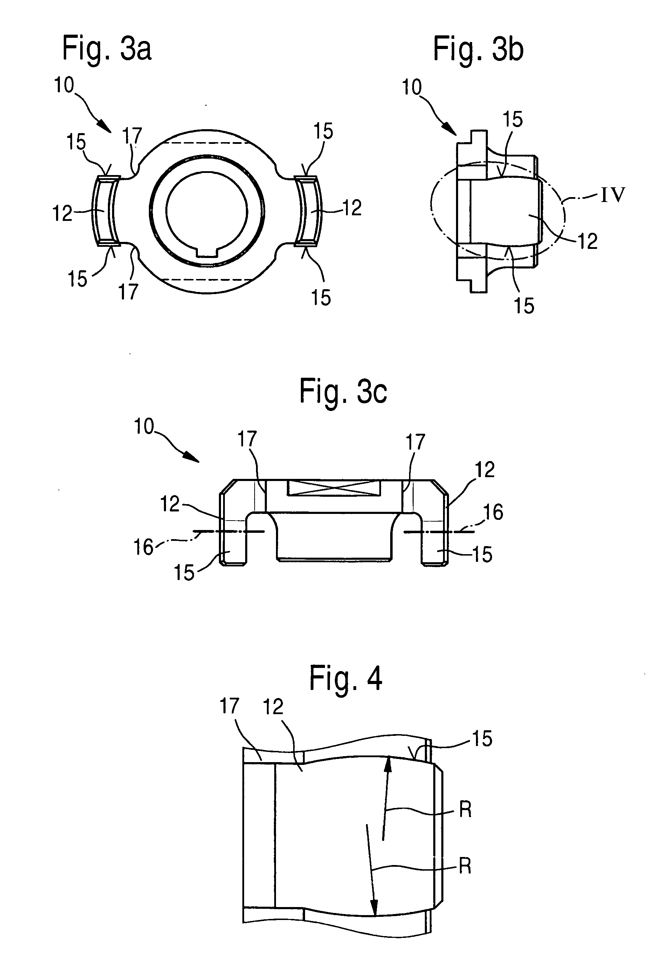

Zur genaueren Darstellung der Klauen 12 mit den jeweiligen Ausbildungen der Klauenflächen 15 ist in den Figuren 3a bis 3c sowie in der Figur 4 das Klauenpaar, welches aus den Klauen 12 gebildet ist, am Beispiel der Klauennabe 10 dargestellt. Die Klauennabe 10 ist in einer isometrischen Weise dargestellt, wobei diese in Figur 3a in einer Draufsicht, in Figur 3b in einer ersten Seitenansicht und in Figur 3c in einer zweiten Seitenansicht dargestellt ist. Die Klauenfläche 15 der Klauen 12 ist jeweils als gekrümmte Fläche vorgesehen, die die Klaue 12 seitlich begrenzt. Diese Fläche erstreckt sich über der gesamten Höhe der Klaue 12 und verläuft von der Außenseite der Klaue bis zum Grundkörper der Klauennabe 10. Die Linienberührung 16 zeigt die Erstreckungsrichtung der Kontaktlinie zwischen der Klauenfläche 15 und dem - hier nicht dargestellten - Übertragungskörper. Diese sind an den jeweiligen Klauenflächen 15 parallel zur Mittellinie der Klauennabe 10 ausgerichtet. Die Klauenflächen 15 weisen im Übergang zum Grundkörper der Klauennabe 10 bzw. des Pumpengliedes 11 eine Kehle 17 auf, wobei sich die Klauenflächen 15 von der Kehle 17 beginnend bis zum außenseitigen Ende der Klauen 12, 13 erstrecken.

Figur 4 verdeutlicht den in die jeweilige Klauenfläche 15 eingebrachten Krümmungsradius R. Die Figur 4 ist ein Ausschnitt aus der Figur 3b, welcher mit IV gekennzeichnet ist, und eine Vergrößerung der Klaue 12 zeigt. Diese ist sowohl oberseitig als auch unterseitig von einer jeweiligen Klauenfläche 15 begrenzt, welche einen Krümmungsradius R aufweist, der eine - aus Gründen der Darstellung - nicht maßstäblich gezeigte nach außen gewölbte ballige Oberfläche der Klauenfläche 15 beschreibt. Der Mittelpunkt, um den der Krümmungsradius R ausgebildet ist, liegt dabei in der vertikalen strickpunktierten Linie in Figur 4. Die horizontale strichpunktierte Linie der Figur 4 zeigt hingegen lediglich die geometrische Mitte der Klaue 12.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Kraftstoffeinspritzpumpe für eine Verbrennungskraftmaschine, welche über eine Kupplungseinheit (1) drehmomentübertragend mit einem Antriebsglied zum Antrieb derselben verbunden ist, wobei die Kupplungseinheit (1) eine am Antriebsglied angeordnete axialfeste und drehangetriebene Klauennabe (10) aufweist, und die Drehbewegung an ein hin- und hergehendes und rotierendes Pumpenglied (11) übertragbar ist, und die Klauennabe (10) sowie das Pumpenglied (11) jeweilige sich einander entgegengerichtete Klauen (12, 13) aufweisen, die seitliche Klauenflächen (15) umfassen, zwischen denen ein sternförmiger und/oder nutenfederartiger Übertragungskörper (14) angeordnet ist, der zur Übertragung des Drehmomentes an die jeweiligen Klauenflächen (15) angrenzt, **dadurch gekennzeichnet, dass** die Klauenflächen (15) mit einer nach außen gewölbten, balligen Oberfläche ausgebildet sind, um wenigstens eine definierte Zone der Krafteinleitung vom Übertragungskörper (14) in die Klauenfläche (15) zu schaffen, sodass die in der Klaue (12, 13) durch die Kraftübertragung auftretenden Spannungen reduzierbar sind und dass die Klauen (12, 13) im Übergang in den Grundkörper der Klauennabe (10) und des Pumpengliedes (11) eine Kehle (17) aufweisen, wobei sich die nach außen gewölbte, ballige Oberfläche der Klauenfläche (15) von der Kehle (17) beginnend über die Höhe der Klaue (12, 13) erstreckt.

2. Kraftstoffeinspritzpumpe nach Anspruch 1,
**dadurch gekennzeichnet, dass** der Übertragungskörper (14) als Kreuzscheibe ausgebildet ist, sodass die Kupplungseinheit (1) eine Kreuzscheibenkupplung ist.

3. Kraftstoffeinspritzpumpe nach Anspruch 1,
**dadurch gekennzeichnet, dass** der Übertragungskörper (14) als Federscheibe ausgebildet ist, sodass die Kupplungseinheit (1) eine Oldham- Kupplung ist.

4. Kraftstoffeinspritzpumpe nach einem der vorgenannten Ansprüche,
**dadurch gekennzeichnet, dass** die nach außen gewölbte ballige Oberfläche der Klauenflächen (15) einem Abschnitt einer Zylindermantelfläche entsprechen, sodass zwischen den Klauenflächen (15) und dem Übertragungskörper (14) eine Linienberührung entsteht.

5. Kraftstoffeinspritzpumpe nach einem der vorgenannten Ansprüche,
**dadurch gekennzeichnet, dass** die ballige Oberfläche in den Klauenflächen (15) einen Krümmungsradius (R) von 50mm bis 150mm, vorzugsweise von 75mm bis 125mm und besonders bevorzugt von 100mm aufweist.

6. Kraftstoffeinspritzpumpe nach einem der vorgenannten Ansprüche,
**dadurch gekennzeichnet, dass** die Klauennabe (10) sowie das Pumpenglied (11) der Kupplungseinheit (1) jeweils zwei Klauen (12, 13) umfassen.

7. Kraftstoffeinspritzpumpe nach einem der vorgenannten Ansprüche,
**dadurch gekennzeichnet, dass** die Klauennabe (10) sowie das Pumpenglied (11) der Kupplungseinheit (1) einen Stahlwerkstoff, umfassend den Werkstoff 16MnCr5 aufweisen.

8. Kraftstoffeinspritzpumpe nach einem der vorgenannten Ansprüche,
**dadurch gekennzeichnet, dass** der Übertragungskörper (14) der Kupplungseinheit (1) einen Stahlwerkstoff, umfassend den Werkstoff 100Cr6 aufweist.

9. Kraftstoffeinspritzpumpe nach einem der vorgenannten Ansprüche,
**dadurch gekennzeichnet, dass** der Übertragungskörper (14) sternförmige Stege umfasst, welche mit einer Maßtoleranz an die Klauenflächen (15) angrenzen und die Maßtoleranz eine Luft von 5µm bis 100µm, vorzugsweise von 25µm bis 75µm und besonders bevorzugt von 50µm aufweist.

## Claims

1. Fuel injection pump for an internal combustion engine, which fuel injection pump is connected in a torque-transmitting manner via a coupling unit (1) to a drive element for driving said fuel injection pump, with the coupling unit (1) having a claw hub (10) which is arranged on the drive element and is axially fixed and driven in rotation, and with it being possible for the rotational movement to be transmitted to a reciprocating and rotating pump element (11), and with the claw hub (10) and the pump element (11) having respective claws (12, 13) which are directed oppositely to one another and which comprise side claw surfaces (15) between which is arranged a star-shaped and/or slot-key-like transmission body (14) which abuts against the respective claw surfaces (15) in order to transmit the torque, **characterized in that** the claw surfaces (15) are formed with an outwardly arched, spherical surface in order to provide at least one defined zone of force introduction from the transmission body (14) into the claw surface (15), such that the stresses occurring in the claw (12, 13) as a result of the transmission of force can be reduced, and **in that** the claws (12, 13) have a fillet (17) at the transition into the base body of the claw hub (10) and of the pump member (11), with the outwardly arched, spherical surface of the claw surface (15) extending over the height of the claw (12, 13) proceeding from the fillet (17).

2. Fuel injection pump according to Claim 1,
**characterized in that** the transmission body (14) is designed as a cross-type disc such that the coupling unit (1) is a cross-type-disc coupling.

3. Fuel injection pump according to Claim 1,
**characterized in that** the transmission body (14) is designed as a spring washer, such that the coupling unit (1) is an Oldham coupling.

4. Fuel injection pump according to one of the preceding claims,
**characterized in that** the outwardly arched, spherical surface of the claw surfaces (15) correspond to a section of a cylindrical lateral surface, such that linear contact is generated between the claw surfaces (15) and the transmission body (14).

5. Fuel injection pump according to one of the preceding claims,
**characterized in that** the spherical surface in the claw surfaces (15) has a radius of curvature (R) of 50 mm to 150 mm, preferably of 75 mm to 125 mm and particularly preferably of 100 mm.

6. Fuel injection pump according to one of the preceding claims,
**characterized in that** the claw hub (10) and the pump element (11) of the coupling unit (1) comprise in each case two claws (12, 13).

7. Fuel injection pump according to one of the preceding claims,
**characterized in that** the claw hub (10) and the pump element (11) of the coupling unit (1) have a steel material comprising the material 16MnCr5.

8. Fuel injection pump according to one of the preceding claims,
**characterized in that** the transmission body (14) of the coupling unit (1) has a steel material comprising the material 100Cr6.

9. Fuel injection pump according to one of the preceding claims,
**characterized in that** the transmission body (14) comprises star-shaped webs which abut against the claw surfaces (15) with a dimensional tolerance, and the dimensional tolerance has a clearance of 5 µm to 100 µm, preferably of 25 µm to 75 µm and particularly preferably of 50 µm.

## Revendications

1. Pompe d'injection de carburant pour un moteur à combustion interne, qui est connectée par le biais d'une unité d'accouplement (1) en transmettant le couple à un organe d'entraînement pour entraîner la pompe, l'unité d'accouplement (1) présentant un moyeu à griffe (10) fixé axialement et entraîné en rotation, disposé sur l'organe d'entraînement, et le mouvement de rotation pouvant être transmis à un organe de pompe (11) rotatif et animé d'un mouvement de va-et-vient, et le moyeu à griffe (10) ainsi que l'organe de pompe (11) présentant à chaque fois des griffes mutuellement opposées (12, 13), qui comprennent des surfaces de griffe latérales (15), entre lesquelles est disposé un corps de transmission (14) en forme d'étoile et/ou de type ressort à rainure, qui est adjacent aux surfaces de griffe respectives (15) pour transmettre le couple, **caractérisée en ce que** les surfaces de griffe (15) sont réalisées avec une surface bombée, cintrée vers l'extérieur, afin de produire au moins une zone définie d'introduction de force depuis le corps de transmission (14) dans la surface de griffe (15), de sorte que les contraintes se produisant dans la griffe (12, 13) du fait de la transmission de force puissent être réduites et **en ce que** les griffes (12, 13), dans la transition au corps de base du moyeu à griffe (10) et de l'organe de pompe (11) présentent une cannelure (17), la surface bombée cintrée vers l'extérieur de la surface de griffe (15) s'étendant à partir de la cannelure (17) sur toute la hauteur de la griffe (12, 13).

2. Pompe d'injection de carburant selon la revendication 1,
**caractérisée en ce que**
le corps de transmission (14) est réalisé sous forme de croisillon, de sorte que l'unité d'accouplement (1) est un accouplement à croisillon.

3. Pompe d'injection de carburant selon la revendication 1,
**caractérisée en ce que**
le corps de transmission (14) est réalisé sous forme de rondelle élastique, de sorte que l'unité d'accouplement (1) est un accouplement Oldham.

4. Pompe d'injection de carburant selon l'une quelconque des revendications précédentes,
**caractérisée en ce que**
la surface bombée cintrée vers l'extérieur des surfaces de griffe (15) correspond à une portion d'une surface d'enveloppe cylindrique, de sorte que l'on obtienne un contact linéaire entre les surfaces de griffe (15) et le corps de transmission (14).

5. Pompe d'injection de carburant selon l'une quelconque des revendications précédentes,
**caractérisée en ce que**
la surface bombée dans les surfaces de griffe (15) présente un rayon de courbure (R) de 50 mm à 150 mm, de préférence de 75 mm à 125 mm, et particulièrement préférablement de 100 mm.

6. Pompe d'injection de carburant selon l'une quelconque des revendications précédentes,
**caractérisée en ce que**
le moyeu à griffe (10) ainsi que l'organe de pompe (11) de l'unité d'accouplement (1) comprennent à chaque fois deux griffes (12, 13).

7. Pompe d'injection de carburant selon l'une quelconque des revendications précédentes,
**caractérisée en ce que**
le moyeu à griffe (10) ainsi que l'organe de pompe (11) de l'unité d'accouplement (1) présentent un matériau en acier, incluant le matériau 16MnCr5.

8. Pompe d'injection de carburant selon l'une quelconque des revendications précédentes,
**caractérisée en ce que**
le corps de transmission (14) de l'unité d'accouplement (1) présente un matériau en acier, incluant le matériau 100Cr6.

9. Pompe d'injection de carburant selon l'une quelconque des revendications précédentes,
**caractérisée en ce que**
le corps de transmission (14) comprend des nervures en forme d'étoile, qui sont adjacentes aux surfaces de griffe (15) avec une tolérance dimensionnelle, et la tolérance dimensionnelle présente un entrefer de 5 µm à 100 µm, de préférence de 25 µm à 75 µm, et particulièrement préférablement de 50 µm.
